# DEMANDE DE BREVET EUROPEEN

(11) **EP 0 724 144 A1**
(43) Date de publication de la demande: **31.07.1996**
(21) Numéro de dépôt: 96400110.1
(22) Date de dépôt: 17.01.1996
(51) Int. Cl.: G01M 1/02, G01B 11/08

(54) **Dispositif de détection et de mesure d'emplacement sur corps tournant, et machine d'équilibrage de corps tournant**

(30) Priorité: 27.01.1995 FR 9500947
(71) Demandeur: MULLER BEM, F-28000 Chartres (FR)
(72) Inventeur: Douine, Denis, F-77400 Lagny sur Marne (FR); Muller, Patrice, F-28000 Chartres (FR)
(74) Mandataire: Kaspar, Jean-Georges

(57) **Abrégé**

Un dispositif de détection et de mesure d'emplacement sur un corps tournant telle qu'une roue (3) de véhicule automobile apte à être entraînée en rotation comporte un moyen (8) d'éclairage apte à éclairer sélectivement le voisinage de l'emplacement à détecter et au moins un moyen capteur (9) d'intensité lumineuse recevant le rayonnement de l'emplacement éclairé de manière à déterminer un paramètre géométrique représentatif de l'emplacement (15) à détecter

Application à l'équilibrage d'un corps tournant, notamment de roue de véhicule automobile.

## Description

L'invention est relative à un dispositif de détection et de mesure d'emplacement sur corps tournant, notamment sur roue de véhicule automobile apte à être entraînée en rotation.

L'invention est également relative à une machine d'équilibrage de roue de véhicule comportant un tel dispositif.

Le document US 5 189 912 décrit un appareil de mesure ultrasonique, ainsi qu'une équilibreuse de roue comportant un tel appareil. L'appareil détermine le rayon d'une jante de roue et les distances séparant respectivement les faces intérieure et extérieure de la jante d'un plan de référence. Un cadre monté à pivotement de manière à chevaucher la roue à équilibrer porte une paire de transducteurs ultrasoniques, de manière à effectuer les mesures lors du pivotement du cadre entre une position extérieure à la roue et une position de chevauchement maximal de la roue. Les mesures relevées sont mémorisées et traitées pour déterminer le rayon de la jante et les distances recherchées.

Le document EP 0 565 320 décrit un procédé et un dispositif pour détecter des paramètres de roue dans une équilibreuse de roue. Dans ce procédé, on projette une nappe laser de manière à former une image sur la roue, en particulier à la jonction de la jante et du pneumatique. On observe l'intersection de la nappe laser et de la roue et on détermine par calcul le contour de l'intersection, de manière à déterminer le bord de jante, dans le cas où ce bord de jante présente un bord franc correspondant à une discontinuité franche de la courbe de contour calculée.

Ce dispositif est généralement satisfaisant, mais est applicable principalement à des jantes en acier présentant un rebord marqué. Ce dispositif nécessite toutefois l'utilisation d'un capteur optique matriciel à deux dimensions et d'un dispositif complexe de traitement électronique faisant appel à des algorithmes de calcul complexes faisant appel à des différentiations, des extrapolations binaires et des comparaisons de valeurs extrapolées à des valeurs obtenues après lissage de mesures réelles.

Le document US 5.054.918 concerne un dispositif d'équilibrage de roue dynamique dans lequel l'incidence d'une nappe lumineuse plane dirigée vers la roue depuis une direction connue est détectée, et dans lequel une modélisation géométrique de Mortenson est utilisée pour la transformation des coordonnées à partir de mesures obtenues au moyen d'une matrice bidimensionnelle de cellules de détection de lumière.

Le document FR 2 679 031 décrit une machine d'équilibrage pour des roues de véhicules automobiles, dans laquelle un dispositif d'exploration sert à déterminer la distance d'un ou plusieurs plans d'équilibrage par rapport à la machine et un rayon d'équilibrage. A cet effet, le dispositif comporte un élément d'exploration pouvant être déployé jusqu'à la position d'équilibrage désirée et envoyant des signaux électriques de sortie à un dispositif d'évaluation, de manière à déterminer avec précision la position angulaire et la longueur de déploiement de l'élément d'exploration.

Ce dispositif donne généralement satisfaction, mais comporte des pièces mobiles nécessitant un usinage de bonne précision d'exécution coûteuse.

L'invention a pour but de remédier aux inconvénients de la technique connue, en créant un nouveau dispositif essentiellement statique, simple à fabriquer et à assembler, ne comportant pas d'organe mécanique mobile d'exécution coûteuse.

L'invention a pour objet un dispositif de détection et de mesure d'emplacement sur corps tournant, en vue de l'équilibrage d'une roue de véhicule automobile apte à être entraînée en rotation, comportant en combinaison : un moyen d'éclairage, au moins un moyen capteur d'intensité lumineuse recevant le rayonnement d'un emplacement éclairé, caractérisé en ce que le moyen d'éclairage est agencé pour éclairer sélectivement au moins le voisinage de l'emplacement à détecter, de manière à créer une source de rayonnement lumineux à l'emplacement à détecter, et en ce que le moyen capteur d'intensité lumineuse est constitué sous forme d'une chambre comportant une face d'entrée munie d'un moyen de définition d'image sur un capteur optique linéaire recevant le rayonnement de l'emplacement éclairé, de manière à déterminer un paramètre géométrique représentatif de l'emplacement à détecter.

Ainsi, en raison de cet éclairage sélectif du voisinage de l'emplacement à détecter, l'invention fournit un moyen de détection et de mesure applicable même à des corps tournants présentant des reliefs peu marqués tels que des roues comportant des jantes en alliage léger.

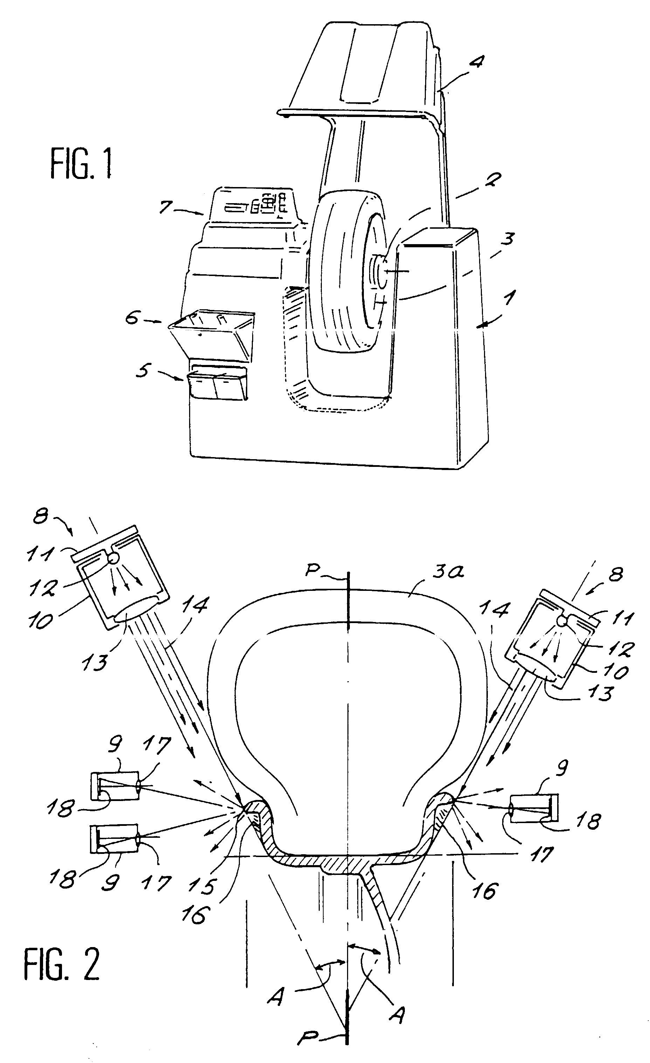

Selon d'autres caractéristiques de l'invention :
- le moyen d'éclairage est adapté pour produire un faisceau d'éclairage composé de rayons sensiblement parallèles,
- le dispositif comporte au moins une source lumineuse à ouverture conique,
- le moyen d'éclairage est une source lumineuse sensiblement ponctuelle placée à proximité immédiate de l'emplacement à détecter,
- chaque capteur d'intensité lumineuse comporte un moyen de focalisation ou de définition d'image sur un capteur optique linéaire, notamment sur un capteur de type CCD,
- l'emplacement à détecter est une courbe sensiblement coaxiale à l'axe de rotation du corps tournant,
- le moyen d'éclairage comporte un moyen de pincement et de mise en place d'une masse d'équilibrage,
- le dispositif présente une conformation en U (figure 1) entourant au moins partiellement le corps tournant à équilibrer,
- le dispositif comprend des moyens d'escamotage du moyen d'éclairage et du moyen capteur d'intensité lumineuse pour éviter les projections de salissures,
- le dispositif est programmable et comporte un programme effectuant la moyenne des signaux captés pendant la rotation du corps tournant, de manière à éliminer les anomalies de structure du corps tournant,
- le dispositif programmable comporte un programme de corrélation, de manière à vérifier la reproductibilité des signaux sur un tour de roue,
- le dispositif programmable comporte un programme de détection de la valve, lors de la rotation de roue,

Avantageusement, le dispositif programmable comporte un programme de corrélation, de manière à vérifier la reproductibilité des signaux sur un tour de roue.

L'invention a également pour objet une machine d'équilibrage de roue de véhicule comportant un dispositif selon l'invention, en particulier une machine d'équilibrage de roue de véhicule comportant un châssis présentant une conformation en U, ou alternativement, un châssis comportant deux parties pivotantes l'une par rapport à l'autre, venant enserrer la roue à mesurer lors de l'exécution de l'opération de mesure.

L'invention sera mieux comprise grâce à la description qui va suivre donnée à titre d'exemple non limitatif en référence aux dessins annexés dans lesquels :
- La figure 1 représente schématiquement une vue en perspective d'une machine d'équilibrage selon l'invention.
- La figure 2 représente schématiquement une vue simplifiée en coupe radiale d'un dispositif selon l'invention.
- La figure 3 représente schématiquement une vue simplifiée en coupe radiale d'un autre dispositif selon l'invention.
- La figure 4 représente schématiquement une courbe typique d'un signal de mesure capté par un dispositif selon l'invention.
- La figure 5 est un schéma géométrique explicatif des mesures obtenues grâce à l'invention.
- La figure 6 est une vue schématique agrandie avec coupe partielle d'un outil de repérage et de positionnement de masse faisant partie d'un dispositif selon l'invention.
- La figure 7 représente schématiquement une vue en coupe par un plan horizontal d'une machine d'équilibrage selon l'invention équipée d'un outil de repérage et de positionnement analogue à l'outil de la figure 6.

En référence à la figure 1, une machine d'équilibrage selon l'invention comporte un bâti 1 supportant un arbre de rotation 2 sur lequel est montée une roue à équilibrer 3 au moyen d'un montage à cône de type connu en soi. La roue 3 est entraînée en rotation manuellement ou par un moteur électrique entraînant au moyen d'une transmission à poulie et courroie l'arbre de rotation 2, un carter de protection 4 étant prévu pour éviter toute projection indésirable ou dangereuse lors de la rotation de la roue à entraîner.

Le bâti 1 est équipé de bacs 5 pour masselottes d'équilibrage, de casiers de rangement 6 portant les cônes de montage de roue, et d'une console de commande et de contrôle 7 comportant un écran graphique et un clavier de commande.

La machine d'équilibrage est programmable et comporte plusieurs programmes de mesure, d'étalonnage, de configuration des accessoires, de formatage et d'affichage, d'un programme spécifique de traitement en statique et en dynamique des différents types de jantes, ainsi que d'un programme d'optimisation de montage du pneu sur la jante afin de réduire le poids des masses employées.

Le bâti 1 présente de préférence une conformation en U de manière à servir de support à un dispositif de détection et de mesure d'emplacement sur la roue.

Alternativement, la configuration en U du châssis 1 peut être obtenue par pivotement autour d'un axe d'un bras déplaçable portant la partie du dispositif selon l'invention située à l'opposé de la console 7 par rapport à la roue 3. Avantageusement les parties du châssis ou du carter de protection supportant le dispositif sont prévues pour assurer l'escamotage du dispositif, de manière à éviter la projection de salissures, gravillons, gouttes d'eau ou autres particules susceptibles de salir, d'endommager ou de nuire au bon fonctionnement du dispositif.

En référence à la figure 2, un dispositif de détection et de mesure d'emplacement comporte des éléments disposés en relation fixe par rapport à un corps tournant 3 à mesurer. Dans le cas d'une roue 3 de véhicule automobile apte à être entraînée en rotation, le dispositif comporte au moins un moyen d'éclairage 8 et au moins un moyen capteur 9 d'intensité lumineuse. Plus précisément, le dispositif comporte deux moyens d'éclairage 8, constitués chacun pour produire un faisceau d'éclairage composé de rayons sensiblement parallèles selon une incidence rasante faisant un angle A compris entre 20 et 35 degrés d'angle sexagésimaux avec le plan de symétrie moyen P de la roue 3. Ainsi, chaque moyen d'éclairage 8 est constitué sous forme de boîtier 10 comportant une carte d'alimentation et de commande 11 d'une source d'émission lumineuse 12 de rayonnement infra-rouge ou d'une lampe halogène, source lumineuse 12 placée au plan focal d'un moyen 13 de création de faisceau 14 de rayons parallèles, du genre lentille ou équivalent. Le faisceau 14 de rayons parallèles produit par le moyen 8 d'éclairage est disposé de manière rasante et éclaire un emplacement recherché tel qu'un bord de jante 15 qui renvoie un rayonnement réfléchi en direction des moyens capteurs 9 d'intensité lumineuse.

En aval du bord de jante 15 réfléchissant une forte intensité lumineuse, une zone d'ombre 16 ne réfléchit pratiquement aucune intensité lumineuse : on a ainsi créé sur le bord de jante 15 et l'espace 16 un éclairage sélectif qui permet de localiser précisément le bord de jante 15 grâce au pic d'intensité lumineuse I réfléchie qui tranche avec l'absence de lumière réfléchie par la zone d'ombre 16. En amont du rebord de jante 15, le faisceau 14 de rayons parallèles rencontre éventuellement le flanc latéral du pneumatique 3a, lequel réfléchit un rayonnement d'intensité faible, sur lequel le pic de rayonnement réfléchi par le rebord 15 tranche également.

Le dispositif selon l'invention produit ainsi un éclairage sélectif mettant en relief un emplacement à détecter ou à mesurer, en produisant au voisinage ou sur cet emplacement à détecter et à mesurer, un pic d'énergie lumineuse qui est détecté en tant que rayonnement réfléchi par des moyens capteurs 9 d'intensité lumineuse.

Ainsi, l'éclairage sélectif produit par le dispositif selon l'invention utilise uniquement un pic d'intensité lumineuse, contrairement aux dispositifs de l'art antérieur qui imposaient de relever la courbe d'intersection d'une nappe laser à deux dimensions avec la jante de la roue et nécessitaient à la fois l'utilisation de capteurs matriciels à deux dimensions et la mise en oeuvre d'algorithmes de calcul complexes, sources d'imprécisions.

Le pic d'intensité lumineuse peut être un pic négatif correspondant à un emplacement ponctuel plus sombre, un pic positif correspondant à un emplacement ponctuel plus brillant, ou une combinaison d'un pic positif et d'un pic négatif juxtaposés appelée "saut de contraste". Un pic d'intensité lumineuse peut être produit directement ou par réflexion sur un bord marqué d'une jante éclairé sous une incidence appropriée.

Chaque moyen capteur 9 d'intensité lumineuse est constitué de préférence sous forme de chambre comportant une face d'entrée munie d'une lentille 17 ou moyen de définition d'image équivalent sur son plan focal, où se trouve placé un capteur optique linéaire 18, par exemple un capteur optique de genre CCD ou équivalent.

De tels boîtiers sont analogues au dispositif de mesure angulaire, notamment pour le contrôle de la géométrie des véhicules, décrit dans la demande de Brevet français 93 12059 du 11 Octobre 1993 au nom du déposant de la présente demande et publiée sous le n° 2.711.238 en date du 21 Avril 1995.

Du point de vue physique, l'éclairage sélectif produit par le dispositif selon l'invention crée à l'emplacement à détecter une source de rayonnement lumineux qui est localisée géométriquement par les moyens capteurs 9 d'intensité lumineuse. De sorte que, par un calcul de triangulation utilisant les distances fixes séparant deux moyens capteurs 9 situés d'un même côté du plan P, on détermine en angle et en distance la position géométrique de l'emplacement à détecter, tel qu'un rebord 15 de jante.

A titre d'exemple, la distance séparant deux moyens capteurs 9 situés d'un même côté, distance définissant une base de triangulation, est comprise avantageusement entre 30 et 400 mm, de manière à détecter les rebords des jantes en acier couramment utilisées.

Bien entendu, l'invention couvre également le cas d'une pluralité de moyens d'éclairage 8 disposés séquentiellement de manière à couvrir toute la plage de diamètres usuels de jantes : de préférence, les moyens d'éclairage émettent séquentiellement sous commande d'un programme installé dans le dispositif de manière à déterminer quel est le moyen d'éclairage 8 qui, pour la roue installée à cet instant, fournit l'éclairage présentant la meilleure sélectivité.

Comme moyen d'éclairage 8 pour la mise en oeuvre de l'invention, on utilise alternativement une source lumineuse à faible ouverture conique ou une source lumineuse sensiblement ponctuelle placée à proximité de l'emplacement à détecter.

A titre d'exemple de source lumineuse pour la mise en oeuvre de l'invention, on peut citer les diodes électroluminescentes, les lampes halogènes, les lampes à éclairs discontinus (appelées "lampes flash" par les spécialistes) ou toutes autres sources équivalentes aptes à fournir un éclairage sélectif comme décrit précédemment.

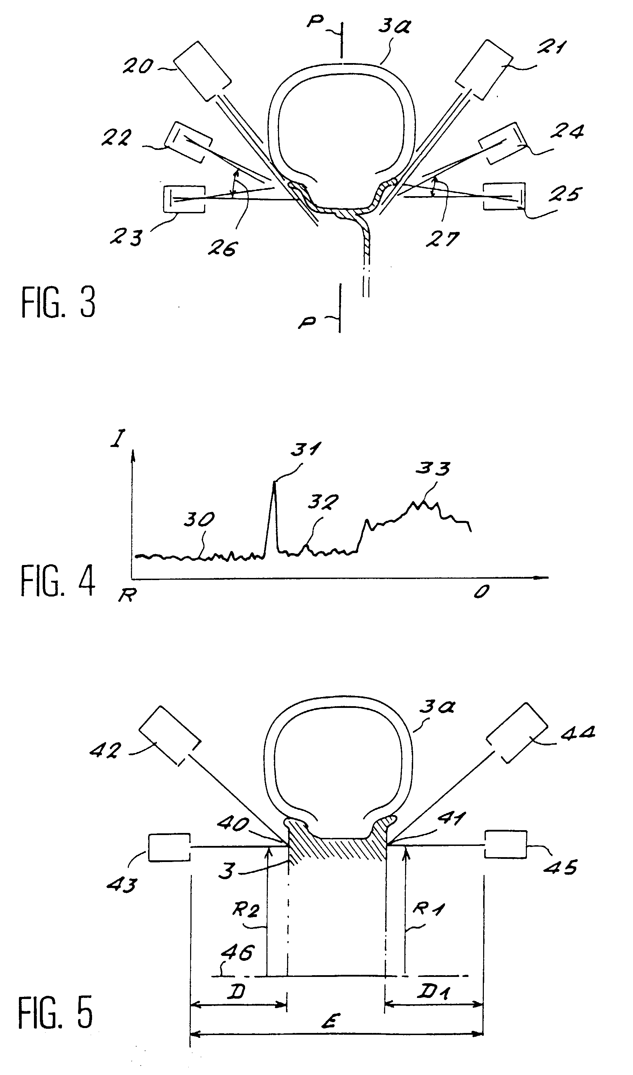

En référence à la figure 3, un dispositif selon l'invention polyvalent capable de détecter et mesurer des roues comportant des jantes en acier ou des jantes en alliage léger comporte de part et d'autre d'un plan moyen P deux sources d'émissions lumineuses 20 et 21 fixes ou déplaçables de manière prédéterminée et deux paires de moyens capteurs 22 à 25. La paire de capteurs 22, 23 est associée au moyen d'éclairage sélectif 20, tandis que la paire de capteurs 24 et 25 est associée au moyen d'éclairage sélectif 21. De préférence, l'axe optique d'un moyen capteur 22 (respectivement 24) fait avec l'axe optique de l'autre capteur 23 (respectivement 25) de la même paire un angle 26 (respectivement 27) d'environ 30°, de manière à constituer une base de triangulation fournissant une bonne précision de calcul des distances à mesurer.

De manière à éliminer les défauts, ou les anomalies dûs aux sculptures du pneumatique 3a, il est avantageux de faire tourner la roue 3 à vitesse réduite pendant la mesure. Dans ce cas, l'emplacement à détecter est un lieu constitué par une courbe sensiblement coaxiale à l'axe de rotation de la roue de véhicule. Le dispositif selon l'invention contient de préférence un programme qui effectue la moyenne des signaux captés pendant la rotation de la roue de véhicule et élimine automatiquement les anomalies de structure (sculptures du pneumatique, défauts de moulage, ...) en ne tenant pas compte des aberrations de mesure. Avantageusement, un programme de corrélation vérifie la reproductibilité des signaux captés par les moyens capteurs 22 à 25 sur un tour complet de la roue de véhicule.

Cette disposition permet ainsi d'effectuer un contrôle ou un dévoilage automatique qui fournit des indications relatives aux défauts de jante, à un montage inadéquat de la roue sur l'arbre d'entraînement en rotation, et à des défauts géométriques inhérents à la roue elle-même (faux-rond ou voile).

Dans l'application à l'équilibrage, le dispositif selon l'invention permet avantageusement, en mesurant la position de l'emplacement de la valve, d'effectuer un programme d'optimisation de l'emplacement du pneu sur la jante grâce à une opération d'équilibrage de la jante elle-même en utilisant des coordonnées relatives à l'emplacement de la valve, puis grâce à une opération d'équilibrage de la roue entière comprenant la jante et le pneu monté en utilisant les coordonnées relatives à l'emplacement de la valve déterminées à l'étape précédente. Ce programme d'optimisation du montage du pneu sur la jante est ainsi effectué grâce à l'invention sans opération manuelle de repérage ou d'indexage entre la jante et le pneumatique.

En référence à la figure 4, un signal d'intensité lumineuse détecté par un moyen capteur d'intensité lumineuse 9 ou 22 à 25 est représenté sous la forme d'une courbe représentant l'intensité lumineiuse I détectée par un moyen capteur précité : une première partie 30 correspond à la lumière réfléchie par le pneumatique 3a, un pic d'intensité lumineuse 31 correspond au rebord de jante 15 ou à l'emplacement à détecter équivalent, une deuxième partie 32 correspond à une zone d'ombre ou de faible intensité lumineuse, tandis qu'une dernière partie 33 correspond au centre de la roue et à des zones réfléchissantes bordant les trous de fixation de la jante. La courbe I d'intensité lumineuse est représentée, de gauche à droite, à partir d'une position correspondant au rayon maximal jusqu'au voisinage du centre de la roue. Lorsque la roue 3 est montée sensiblement coaxialement à l'arbre d'entraînement de rotation 2, les courbes I d'intensité lumineuse se superposent sensiblement à chaque tour complet de roue. La corrélation à chaque tour de roue est vérifiée par le programme faisant partie du dispositif selon l'invention, qui émet un message d'erreur ou de vérification dans le cas d'une corrélation insuffisante.

Egalement, de manière à éliminer les déchirures ou les bosses et indentations de la jante, le programme contenu dans le dispositif selon l'invention effectue la moyenne des courbes I de mesure et élimine les aberrations correspondant à des sauts brusques du pic 31 d'intensité lumineuse I.

En référence à la figure 5, dans un autre mode de réalisation de l'invention, on crée, sur une jante en alliage léger comportant des faces planes, un éclairage au voisinage d'un emplacement à détecter au moyen d'une source lumineuse sensiblement ponctuelle placée à proximité immédiate de l'emplacement à détecter. Une source émettant à un emplacement 40 ou 41 émet des rayons lumineux qui sont détectés par des boîtiers capteurs 42 à 45 disposés à demeure à une position connue ; de préférence, chaque paire 42 et 43 (44 et 45) est disposée dans un plan radial passant par l'axe de rotation 46 selon une disposition déterminée pour que les axes optiques d'une paire de moyens capteurs 42 et 43 (44 et 45) définissent un repère géométrique permettant de localiser le rayon R correspondant à la source d'émission lumineuse 40 et le déport D séparant la source d'émission lumineuse 40 d'un plan de référence pré-déterminé correspondant par exemple à l'entrée d'un moyen capteur 43.

De manière analogue, la source d'émission lumineuse 41 est repérée en rayon R1 et en déport D1 par rapport à un autre plan de référence pré-déterminé. Connaissant l'espacement E des deux plans de référence qui sont de préférence parallèles l'un à l'autre, on peut déterminer de manière connue, par de simples opérations géométriques à la portée de l'homme du métier, les positions géométriques des sources d'émission lumineuse 40 ou 41 ou des emplacements situés à proximité immédiate et en relation fixe par rapport à ces sources d'émission ponctuelles 40 ou 41.

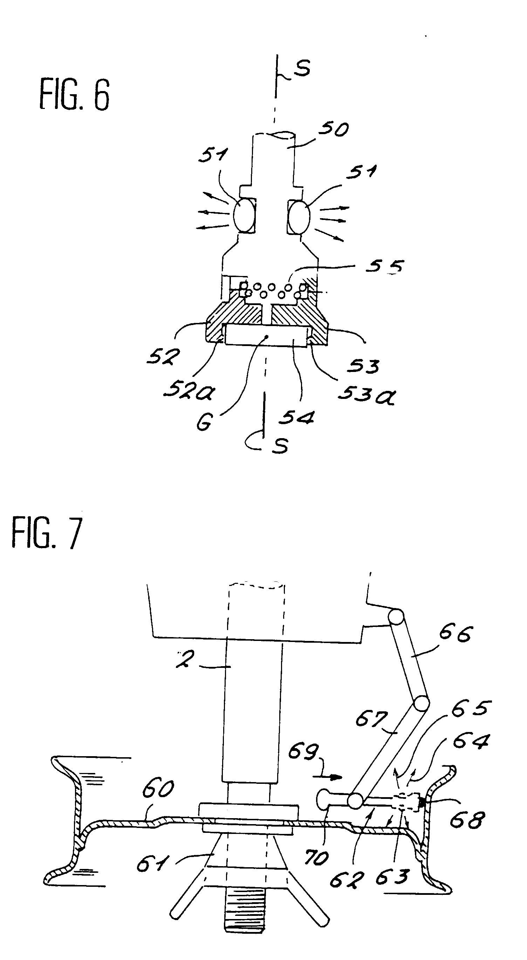

En référence à la figure 6, une source d'émission lumineuse sensiblement ponctuelle utilisable pour un procédé de mesure décrit en référence à la figure 5 est constituée d'un support 50 recevant une diode électroluminescente 51 ou moyen équivalent d'émission lumineuse et comporte en partie inférieure une pince à deux mâchoires 52, 53 aptes à saisir une masse d'équilibrage 54, du genre masse à coller utilisable en particulier pour l'équilibrage de jantes en alliage léger. Les mâchoires 52 et 53 sont soumises à l'action d'un ressort hélicoïdal 55 de manière à s'écarter symétriquement l'une de l'autre, afin que le centre de gravité G de la masselotte 54 soit toujours situé sur l'axe de symétrie S de l'outil, quel que soit l'écartement des mâchoires 52 et 53. Avantageusement, au moins une mâchoire 52 ou 53 porte un moyen de marquage 52a ou 53a de la jante définissant au cours de la rotation de la roue un fil de marquage de la position de la masse assurant une vérification supplémentaire du bon positionnement de la masse d'équilibrage avant fixation définitive de celle-ci. Le moyen de marquage peut être constitué par une bille de marquage, un feutre coloré ou un autre moyen porteur d'une encre évanescente ou biodégradable, un jet d'encre, de poudre ou un marqueur à craie.

Selon une variante avantageuse non représentée, la source d'émission lumineuse 51 peut être constituée sous forme d'une masse d'équilibrage factice de préférence aux mêmes dimensions que la masse 54, de manière à repérer exactement l'emplacement de la masse d'équilibrage avant fixation définitive de celle-ci. A cet effet, la pince comportant deux mâchoires 52 ou 53 peut être constituée de manière à fermer un contact électrique provoquant l'émission lumineuse de la masse factice électroluminescente lors de son pincement.

L'outil décrit en référence à la figure 6 peut contenir des moyens de stockage d'énergie du genre pile ou batterie électrique rechargeable ou alternativement peut être relié à une alimentation électrique apte à alimenter la source d'émission lumineuse 51. Dans cette variante avantageuse, le dispositif selon l'invention effectue tout d'abord un calcul préliminaire pour estimer l'ordre de grandeur et la position des masses d'équilibrage nécessaires, et indique ensuite à l'opérateur la taille de la masse factice d'émission lumineuse à utiliser en fonction du ou des rayons d'équilibrage disponibles.

En référence à la figure 7, une machine d'équilibrage selon l'invention comporte un arbre 2 d'entraînement en rotation, sur lequel est fixée une jante 60 au moyen d'un montage à cônes 61. La machine est représentée en coupe par un plan diamétral sensiblement horizontal. Un outil 62 comportant une source d'émission lumineuse 63 mettant deux rayons 64 et 65 à détecter est fixé à l'extrémité d'un montage mécanique à deux leviers 66 et 67 au moment de la fixation de la masse 68 collée sur une surface cylindrique de la jante 60. La masse cylindrique à coller est fixée par poussée dans le sens de la flèche 69 sur la poignée 70 orientable disposée à l'extrémité du deuxième levier 67.

De préférence, la poussée dans le sens de la flèche 69 est exercée selon un mouvement de pivotement autour d'un ou de plusieurs axes verticaux, mouvement qui correspond à la meilleure position ergonomique pour l'opérateur. La prise et la fixation définitive de la masse d'équilibrage collée sur la surface intérieure de la jante est obtenue après un maintien d'une ou plusieurs minutes sans fatigue pour l'opérateur.

L'invention décrite en référence à des modes de réalisation particuliers n'y est nullement limitée, mais couvre au contraire toute modification de forme et toute variante de réalisation dans le cadre et dans l'esprit de l'invention. Ainsi, le dispositif utilisé de préférence comme faisant partie intégrante d'une machine d'équilibrage de corps tournant pourrait également être utilisé de manière générale pour le contrôle géométrique des corps tournants sans sortir du cadre de la présente invention.

## Revendications

1. Dispositif de détection et de mesure d'emplacement (15) sur corps tournant, en vue de l'équilibrage d'une roue (3) de véhicule automobile apte à être entraînée en rotation, comportant en combinaison : un moyen (8) d'éclairage, au moins un moyen capteur d'intensité lumineuse recevant le rayonnement d'un emplacement éclairé, caractérisé en ce que le moyen d'éclairage est agencé pour éclairer sélectivement au moins le voisinage de l'emplacement (15) à détecter, de manière à créer une source de rayonnement lumineux à l'emplacement à détecter, et en ce que le moyen capteur (9) d'intensité lumineuse est constitué sous forme d'une chambre comportant une face d'entrée munie d'un moyen de définition d'image sur un capteur optique linéaire (18) recevant le rayonnement de l'emplacement éclairé, de manière à déterminer un paramètre géométrique représentatif de l'emplacement (15) à détecter.

2. Dispositif selon la revendication 1, caractérisé en ce que le moyen d'éclairage (8) est adapté pour produire un faisceau (14) d'éclairage composé de rayons sensiblement parrallèles.

3. Dispositif selon la revendication 1, caractérisé en ce que le dispositif comporte au moins une source lumineuse à ouverture conique.

4. Dispositif selon la revendication 1, caractérisé en ce que le moyen d'éclairage (51) est une source lumineuse (40, 41) sensiblement ponctuelle placée à proximité immédiate de l'emplacement à détecter.

5. Dispositif selon l'une des revendications 1 à 4, caractérisé en ce que chaque capteur (9, 22-25, 42-45) d'intensité lumineuse comporte un moyen de focalisation ou de définition d'image sur un capteur optique linéaire, notamment sur un capteur de type CCD.

6. Dispositif selon l'une des revendications précédentes, caractérisé en ce que l'emplacement à détecter est une courbe sensiblement coaxiale à l'axe de rotation du corps tournant (3).

7. Dispositif selon l'une des revendications 1 à 6, caractérisé en ce que le moyen d'éclairage comporte un moyen (52-53, 55) de pincement et de mise en place d'une masse d'équilibrage (54).

8. Dispositif selon la revendication 1, caractérisé en ce que le dispositif présente une conformation en U (figure 1) entourant au moins partiellement le corps tournant (3) à équilibrer.

9. Dispositif selon la revendication 1, caractérisé en ce que le dispositif comprend des moyens d'escamotage du moyen d'éclairage et du moyen capteur d'intensité lumineuse pour éviter les projections de salissures.

10. Dispositif selon l'une des revendications précédentes, caractérisé en ce que le dispositif est programmable et comporte un programme effectuant la moyenne des signaux captés pendant la rotation du corps tournant, de manière à éliminer les anomalies de structure du corps tournant.

11. Dispositif selon la revendication 10, caractérisé en ce que le dispositif programmable comporte un programme de corrélation, de manière à vérifier la reproductibilité des signaux sur un tour de roue.

12. Dispositif selon la revendication 9, caractérisé en ce que le dispositif programmable comporte un programme de détection de la valve, lors de la rotation de roue.

13. Machine d'équilibrage de roue de véhicule, du type comportant un dispositif selon l'une quelconque des revendications précédentes.
